# EUROPEAN PATENT SPECIFICATION

(11) **EP 1 538 815 B1**
(45) Date of publication and mention of the grant of the patent: **11.01.2012**
(21) Application number: 04027448.2
(22) Date of filing: 18.11.2004
(51) Int. Cl.: H04M 1/05, H04R 1/10

(54) **Ear wearable type wireless terminal**
Kabelloses, am Ohr tragbares Endgerät
Terminal sans fil, portable à l'oreille

(30) Priority: 04.12.2003 KR 2003087728
(43) Date of publication of application: 08.06.2005
(73) Proprietor: SAMSUNG ELECTRONICS CO., LTD., Suwon-si, Gyeonggi-do (KR)
(72) Inventor: Lee, Woo-Seok, Yeongtong-gu Suwon-si Gyeonggi-do (KR); Han, Beom-Ku, Yeongtong-gu Suwon-si Gyeonggi-do (KR); Lee, Jong-Seong, Yeongtong-gu Suwon-si Gyeonggi-do (KR)
(74) Representative: Grünecker, Kinkeldey, Stockmair & Schwanhäusser

(56) References cited:
- WO-A-02/062098
- US-A- 5 761 298
- US-B1- 6 230 029
- PATENT ABSTRACTS OF JAPAN vol. 017, no. 152 (E-1340), 25 March 1993 (1993-03-25) & JP 04 319841 A (FOSTER ELECTRIC CO LTD), 10 November 1992 (1992-11-10)

## Description

### BACKGROUND OF THE INVENTION

### 1. Field of the Invention

The present invention relates to a wearable type wireless terminal, and more particularly to a headset worn on the user's left or right ear, which is freely selected in accordance with the user's preference.

### 2. Description of the Related Art

Generally, the term "portable wireless terminals" refers to electronic devices that are portable and enable owners of the devices to communicate in a wireless way. Such portable wireless terminals tend to be much leaner and lighter in consideration of portability thereof, and their functions have been rapidly diversified so as to provide various multimedia services. These tendencies towards miniaturization in size and weight as well as diversification in functions and applications of the portable wireless terminals will continue in the future, and accordingly futuristic portable wireless terminals will be developed so as to adapt to various multimedia environments or internet environments. Nowadays, the use of portable wireless terminals is generalized without regard to the age or sex of the user, or the time and place of use, and thus portable wireless terminals have become recognized as ever-present necessities of daily life.

On the basis of their shape, for example, conventional portable wireless terminals may be classified into a bar-type wireless terminal, a flip-type wireless terminal, and a folder-type wireless terminal. The bar-type wireless terminal comprises a single housing having a bar shape, the flip-type wireless terminal comprises a bar-type housing and a flip part hingably attached to the housing, and the folder-type wireless terminal comprises a bar-type housing and a folder part hingably attached to the housing in a foldable manner.

Further, on the basis of the manner or positions in which they are worn, portable wireless terminals may be classified into a neck wearable type wireless terminal configured to be worn around the user's neck using a string or lace known as a lanyard, a wrist wearable type wireless terminal configured to be worn on the user's wrist, or an ear wearable type wireless terminal configured to be worn on the user's ear.

Furthermore, on the basis of the way in which they open or close, portable wireless terminals may be classified into a rotation type wireless terminal, and a sliding type wireless terminal. In the case of the rotation type wireless terminal, its two housings are hingably connected to be opened away from each other in a rotatable manner while in a closed state their facing surfaces are in contact with each other. In the case of the sliding-type wireless terminal, its two housings are opened away from or closed towards each other by longitudinal sliding movements of the housings relative to each other. Those skilled in the art will easily appreciate the variously classified portable wireless terminals as described above.

Viewed with respect to function, further, conventional portable wireless terminals have been developed to enable high-speed data communication, in addition to voice communication. Since a consumer's desire for high-speed data communication continues to increase, in the near future, portable wireless terminals may provide various associated services by the aid of a wireless communication technique enabling high-speed data transmission.

Currently, conventional portable wireless terminals may also have installed therein a camera lens for the transmission of video signals, etc. According to this latest trend, generally, portable wireless terminals may internally or externally include a camera lens module, and enable video conferencing between a user and another party, or the filming or photographing of a desired subject.

However, for conventional portable wireless terminals designed to be worn, especially, ear wearable type wireless terminals, the following problems are generally encountered.

Among conventional portable wireless terminals, a headset to be worn on the user's ear is usually designed to be worn on only a predetermined one of the user's ears.

Therefore, a headset designed only to be worn on the right ear is troublesome, from the user's standpoint, if the user wishes to wear it on the left ear. Such a problem is due to a speaker fixedly mounted to the headset.

Moreover, such a conventional ear wearable type headset is configured to be worn on an upper portion of the ear, and this causes trouble and inconvenience in relation to the way in which the headset is worn. Such an inconvenience caused in wearing of the conventional ear wearable type headset is further increased due to the speaker fixedly mounted thereto.

JP 04 319 814 A discloses an ear set with an earphone and a hook attached to an upper side of an earlobe of the user. The hook will surround part of the earlobe from above.

WO 02/062 089 discloses an earphone/microphone comprising a supporting band extending over and behind the ear, to which the earphone by the auditory channel and the microphone extending forward from the ear are connected. An additional adjusting band attached to the supporting band is located under the ear.

US 5,761,298 A discloses a communication headset with a headset enclosure as a first housing. The corresponding headset further comprises an arcuate ear hook used for fitting the headset onto the user's ear.

US 6,230,029 B1 discloses a wireless headset system with a flexible rubber ear hook or a ridged ear hook to which some further housing is connected used for accommodating a battery pack module. The corresponding ear hook is used for wearing the headset on the ear or earlobe with the hook engaging the earlobe from above.

### Summary of the Invention

It is an object of the present invention to provide a wireless terminal configured to be worn around the earlobe, resulting in improvement fixing the terminal to the user's ear, wherein it is possible to wear the terminal on the user's left or right ear and to freely adjust the variability of the speaker.

This object is solved by the features of claim 1.

Advantageous embodiments of the invention are disclosed by the sub claims.

### Brief Description of the Drawings

The above and other object, features and other advantages of the present invention will be more clearly understood from the following detailed description taken in conjunction with the accompanying drawings, in which:
Fig. 1 is a front view illustrating an ear wearable type wireless terminal in accordance with a preferred embodiment of the present invention:
Fig. 2 is a front view illustrating a state wherein a second housing shown in Fig. 1 is rotated 90°;
Fig. 3 is a front view illustrating a state wherein the second housing shown in Fig. 1 is rotated 180°;
Fig. 4 is a front view illustrating a state wherein a tensile member of the terminal shown in Fig. 1 is forcibly subjected to a tension; and
Fig. 5 is a perspective view illustrating an exemplary state wherein the wireless terminal in accordance with the preferred embodiment of the present invention is worn on a lower portion of the left ear freely selected in accordance with the user's preference.

### DETAILED DESCRIPTION OF THE PREFERRED EMBODIMENTS

Now, a preferred embodiment of the present invention will be described in detail with reference to the annexed drawings. In the following description, a detailed description of known functions and configurations incorporated herein will be omitted when it may make the subject matter of the present invention unclear.

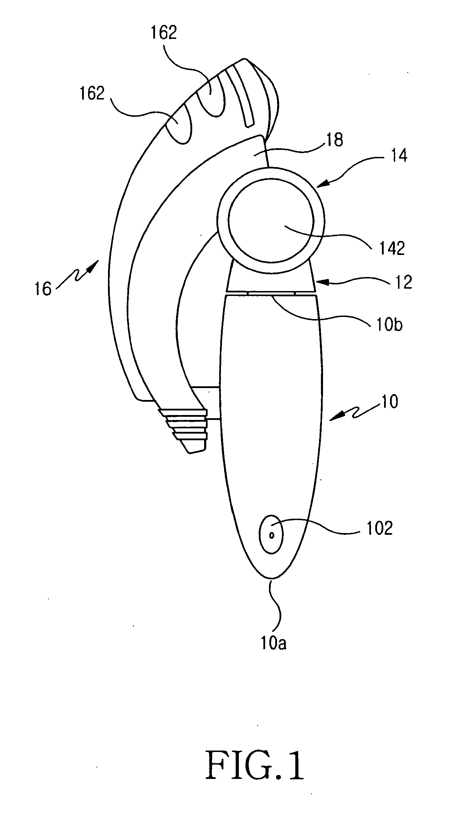

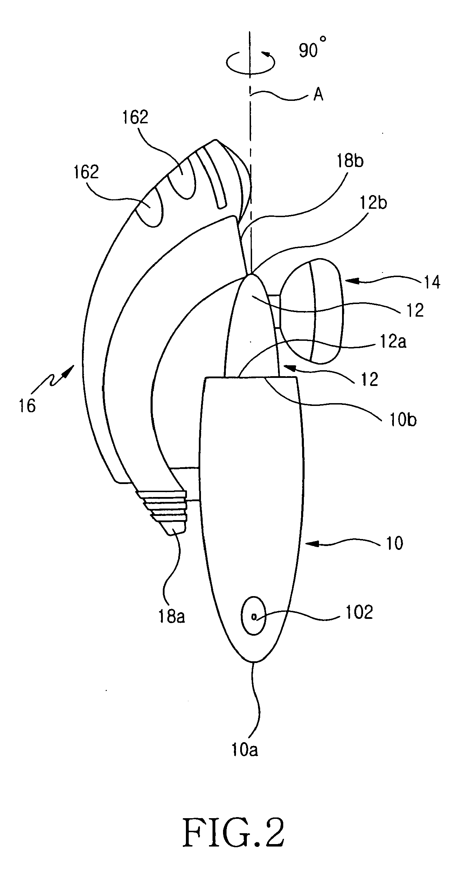

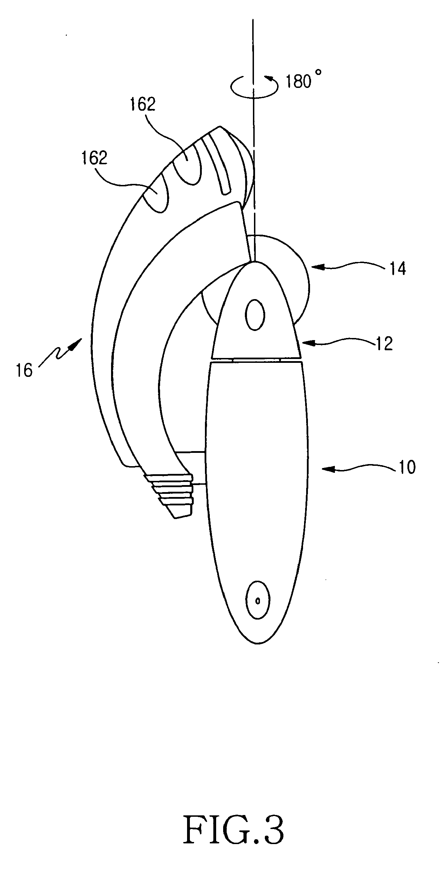

As shown in Figs. 1 to 4, a wireless terminal in accordance with the present invention is of the wearable type, more particularly, of the headset type to be worn on a lower portion of the user's left or right ear, which is freely selected in accordance with the user's preference.

The ear wearable type wireless terminal of the present invention comprises a first housing 10 preferably having an elongated cone shape extending in a longitudinal direction, a second housing 12 also preferably having a cone shape and rotatably connected to one end of the first housing 10, a third housing 14 located at one end of the second housing 12 so as to face a direction perpendicular to the longitudinal direction, and a holder 16 fixed, at one end thereof, to the first housing 10. As the other free end of the holder 16 is subjected to a force, which causes it to incline toward the third housing 14, the holder 16 is adapted to engage a lower portion of the user's left or right ear.

The first housing 10 has a first end 10a, and a second end 10b facing a first end 12a of the second housing 12. A microphone 102 is mounted in the first housing 10 at a position adjacent to the first end 10a.

The second housing 12 has the first end 12a facing the second end 10b of the first housing 10, and preferably, second end 12b has pointed shape. The respective first and second housings 10 and 12 therefore combine to have an overall cone shape.

The third housing 14 is integrally coupled to the second housing 12 so as to rotate along with the second housing 12. A speaker 142 is mounted in the third housing 14 to face a direction perpendicular to the longitudinal direction, so as to emit sounds into the use's ear. The second housing 12 is connected to the first housing 10 so that it is rotatable by an angle of approximately 180° or more, and the speaker 142 of the third housing 14, integrally coupled to the second housing 12, is adapted to rotate along with the second housing 12. With such a configuration, therefore, the speaker 142 can be inserted into the user's ear in an appropriate orientation.

The holder 16 has a tensile member 18, which is preferably made of a rubber or silicone material, and is positioned closer to the first and second housings 10 and 12 than the holder 16. The tensile member 18 preferably has an arcuate form, and has a first end 18a fixed to the first housing 10. Starting from the first end 18a, the tensile member 18 curvedly extends away from the first and second housings 10 and 12, and then a second end 18b thereof, conversely, curvedly extends in a direction approaching the second end 12b of the second housing 12. The tensile member 18 has a width gradually increasing toward the second end 18b thereof. Here, the second end 18b of the tensile member 18 always retains a force having a tendency to incline it toward the second housing 12, and thus the tensile member 18 is adapted to provide a tension when moved away from the second housing 12.

The holder 16 preferably increases in width from second end 18b toward first end 18a, and further has one or more keys 162 arranged at certain positions on the wider surface thereof. In the drawings, two keys are shown for providing functions for the terminal.

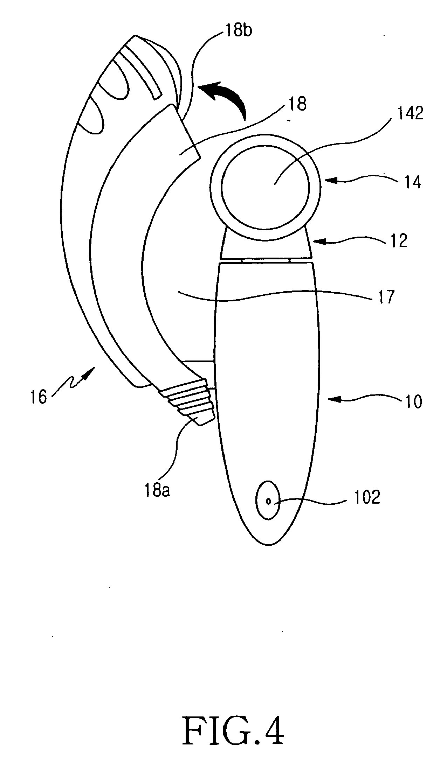

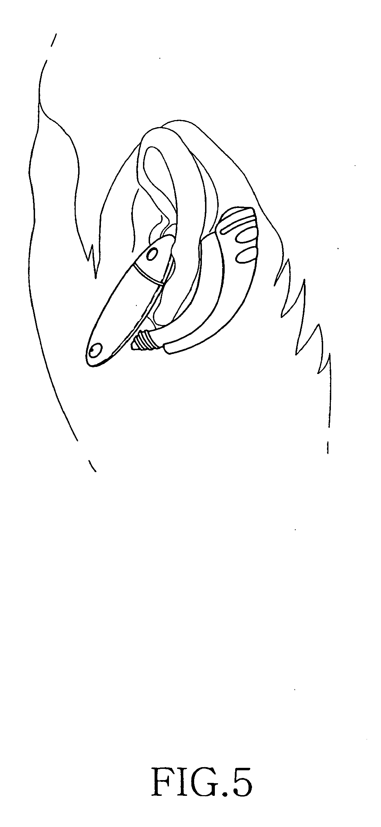

With such a configuration, a certain space, designated as reference numeral 17 (shown in Fig. 4), is defined between, on the one hand, the first and second housings 10 and 12, and, on the other hand, the holder 16. Into the space 17 a lower portion of a user's ear fits, and the tension provided by the tensile member 18 acts to firmly fix the wireless terminal to the ear. Fig. 5 illustrates a worn state of the wireless terminal according to the present invention. The wireless terminal as shown is a headset to be worn on a lower portion of the user's ear.

Although Fig. 5 illustrates a worn state of the wireless headset on the user's left ear, it can be worn on the user's right ear in the same manner by rotating the second and third housings 180°. As shown in Fig. 5, the headset in accordance with the present invention is designed to be worn from a lower side of the user's ear, so that the first and second housings 10 and 12 and the speaker 142 are disposed on the lower portion of the user's ear. In this case, since the tensile member 18 is a portion to be in contact with the ear, it is preferably made up of a silicone or rubber material.

Additionally, in order to enable wireless communication, the headset of the present invention may use a known Bluetooth module.

As is apparent from the above description, an ear wearable type wireless terminal of the headset type in accordance with the present invention results in several advantageous effects. First, it can be worn on a lower portion of the user's left or right ear, which is freely selected based on the user's preference, resulting in an improvement in convenience in relation to the way in which the terminal is worn as well as convenience in use. To this end, according to the present invention, a speaker is installed in the wireless terminal so that it is rotatable by an angle of approximately 180° or more, thereby enabling a user to freely select the ear on which the headset is worn, and to insert the speaker into the ear at an appropriate position.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. An ear wearable type wireless terminal comprising:
a first housing (10) extending in a longitudinal direction;
a second housing (12) rotatably connected to a second end (10b) of the first housing (10) along the longitudinal direction;
a third housing (14) located at the end (12b) of the second housing (12) so as to face a direction perpendicular to the longitudinal direction,
**characterized in that**
a holder (16, 18) has a first end (18a) fixed to the first housing (10) at a position adjacent to the first end (10a) of the first housing(10) and a second end (18b) of the holder (16,18) being subjected to a force causing it to incline toward the third housing (14), wherein the holder (16,18) only engages a lower portion of an user's ear from the back side of the user's ear.

2. The terminal according to claim 1, wherein the wireless terminal is a headset.

3. The terminal of claim 1 or 2, wherein the holder (16,18) includes a tensile member (18), the tensile member being made in particular of silicone material, and positioned to face the first and second housings (10,12).

4. The terminal according to claim 3, wherein the tensile member (18), along with the holder (16,18), has an arcuate shape so that, starting from the first end (18a) fixed to the first housing (10), the tensile member curvedly extends away from the first and second housings (10,12), and then the second end (18b) of the housing curvedly extends in a direction approaching the second end (12b) of the second housing (12).

5. The terminal according to one of the previous claims, wherein the holder (16,18) has a width increasing from the first to the second end (18a,b) thereof.

6. The terminal according to one of the previous claims, wherein the holder (16,18) has one or more keys (162).

7. The terminal according to one of the previous claims, wherein the first housing (10) has a microphone (102), and
the third housing (14) has a speaker (142) installed to face the direction perpendicular to the longitudinal direction and adapted to emit sounds.

8. The terminal according to claim 7, wherein the speaker (142) is rotatable together with the second and third housings (12,14) relative to the first housing (10) by an angle of approximately 180° or more.

9. The terminal according to one of the previous claims, wherein the first and second housings (10,12) define a space (17) between them and the holder (16,18), in which the lower portion of the user's ear is insertable.

## Patentansprüche

1. Drahtloses, am Ohr tragbares Endgerät, enthaltend:
ein erstes Gehäuse (10), das sich in einer Längsrichtung erstreckt;
ein zweites Gehäuse (12), das mit einem zweiten Ende (10b) des ersten Gehäuses (10) in Längsrichtung drehbar verbunden ist;
ein drittes Gehäuse (14), das sich an dem Ende (12b) des zweiten Gehäuses (12) befindet, um so einer Richtung zugewandt zu sein, die zur Längsrichtung senkrecht ist,
**dadurch gekennzeichnet, dass**
ein Halter (16, 18) ein erstes Ende (18a) hat, das an dem ersten Gehäuse (10) in einer Position benachbart dem ersten Ende (10a) des ersten Gehäuses (10) befestigt ist, und ein zweites Ende (18b) des Halters (16, 18) einer Kraft unterworfen ist, die bewirkt, dass sich dieser zu dem dritten Gehäuse (14) neigt, wobei der Halter (16, 18) lediglich mit einem unteren Abschnitt eines Ohrs des Benutzers von der Rückseite des Ohrs des Benutzers her in Kontakt ist.

2. Endgerät nach Anspruch 1, wobei das drahtlose Endgerät ein Headset ist.

3. Endgerät nach Anspruch 1 oder 2, bei dem der Halter (16, 18) ein dehnbares Element (18) enthält, wobei das dehnbare Element insbesondere aus einem Silikonmaterial besteht und derart angeordnet ist, dass es dem ersten und dem zweiten Gehäuse (10, 12) zugewandt ist.

4. Endgerät nach Anspruch 3, bei dem das dehnbare Element (18) zusammen mit dem Halter (16, 18) derart bogenförmig ist, dass, beginnend von dem ersten Ende (18a), das an dem ersten Gehäuse (10) befestigt ist, sich das dehnbare Element kurvenförmig von dem ersten und dem zweiten Gehäuse (10, 12) weg erstreckt, und sich anschließend das zweite Ende (18b) des Gehäuses kurvenförmig in einer Richtung erstreckt, die sich dem zweiten Ende (12b) des zweiten Gehäuses (12) nähert.

5. Endgerät nach einem der vorhergehenden Ansprüche, bei dem der Halter (16, 18) eine Breite hat, die von dem ersten zu dem zweiten Ende (18a, b) desselben zunimmt.

6. Endgerät nach einem der vorhergehenden Ansprüche, bei dem der Halter (16, 18) wenigstens eine Taste (162) aufweist.

7. Endgerät nach einem der vorhergehenden Ansprüche, bei dem das erste Gehäuse (10) ein Mikrofon (102) hat und
das dritte Gehäuse (14) einen Lautsprecher (142) hat, der derart angebracht ist, dass er der Richtung senkrecht zur Längsrichtung zugewandt ist, und dazu eingerichtet ist, Töne zu emittieren.

8. Endgerät nach Anspruch 7, bei dem der Lautsprecher (142) zusammen mit dem zweiten und dem dritten Gehäuse (12, 14) im Bezug auf das erste Gehäuse (10) um einen Winkel von wenigstens etwa 180° drehbar ist.

9. Endgerät nach einem der vorhergehenden Ansprüche, bei dem das erste und das zweite Gehäuse (10, 12) einen Zwischenraum (17) zwischen sich und dem Halter (16, 18) bilden, in den der untere Abschnitt des Ohrs des Benutzers eingefügt werden kann.

## Revendications

1. Terminal sans fil du type pouvant être porté sur une oreille comprenant :
un premier boîtier (10) s'étendant dans une direction longitudinale ;
un deuxième boîtier (12) relié de manière rotative à une deuxième extrémité (10b) du premier boîtier (10) dans la direction longitudinale ;
un troisième boîtier (14) situé à l'extrémité (12b) du deuxième boîtier (12) de façon à être orienté dans une direction perpendiculaire à la direction longitudinale,
**caractérisé en ce que**
un support (16, 18) possède une première extrémité (18a) fixée au premier boîtier (10) dans une position adjacente à la première extrémité (10a) du premier boîtier (10) et une deuxième extrémité (18b) du support (16, 18) soumise à une force provoquant son inclinaison vers le troisième boîtier (14), dans lequel le support (16, 18) vient en prise seulement avec la partie inférieure de l'oreille de l'utilisateur depuis la face arrière de l'oreille de l'utilisateur.

2. Terminal selon la revendication 1, dans lequel le terminal sans fil est un casque-micro.

3. Terminal selon la revendication 1 ou 2, dans lequel le support (16, 18) comporte un élément de traction (18), l'élément de traction étant réalisé en particulier dans un matériau en silicone et positionné de manière à être orienté vers les premier et deuxième boîtiers (10, 12).

4. Terminal selon la revendication 3, dans lequel l'élément de traction (18) ainsi que le support (16, 18), ont une forme arquée de sorte que, en partant de la première extrémité (18a) fixée au premier boîtier (10), l'élément de traction s'étend de manière courbe en
s'éloignant des premier et deuxième boîtiers (10, 12) et la deuxième extrémité (18b) du boîtier s'étend ensuite de manière courbe dans une direction se rapprochant de la deuxième extrémité (12b) du deuxième boîtier (12).

5. Terminal selon l'une des revendications précédentes, dans lequel le support (16, 18) a une largeur qui augmente de sa première à sa deuxième extrémité (18ab).

6. Terminal selon l'une des revendications précédentes, dans lequel le support (16, 18) comporte une ou plusieurs touches (162).

7. Terminal selon l'une des revendications précédentes, dans lequel le premier boîtier (10) comporte un microphone (102), et
le troisième boîtier (14) comporte un haut-parleur (142) installé de manière à être orienté dans la direction perpendiculaire à la direction longitudinale et adapté à émettre des sons.

8. Terminal selon la revendication 7, dans lequel le haut-parleur (142) peut tourner avec les deuxième et troisième boîtiers (12, 14) par rapport au premier boîtier (10) d'un angle d'approximativement 180° ou plus.

9. Terminal selon l'une des revendications précédentes, dans lequel les premier et deuxième boîtiers (10, 12) définissent un espace (17) entre eux et le support (16, 18) dans lequel peut être insérée la partie inférieure de l'oreille de l'utilisateur.
